# FASCICULE DE BREVET EUROPEEN

(11) **EP 3 573 869 B1**
(45) Date de publication et mention de la délivrance du brevet: **25.11.2020**
(21) Numéro de dépôt: 17829683.6
(22) Date de dépôt: 18.12.2017
(51) Int. Cl.: B60T 8/175, B60T 8/1755

(54) **SYSTEME DE CONTROLE D'UN GROUPE MOTO-PROPULSEUR DE VEHICULE AUTOMOBILE AVEC CONTRÔLE ANTI-PATINAGE ANTICIPÉ**
SYSTEM ZUR STEUERUNG EINES ANTRIEBSSTRANGS EINES KRAFTFAHRZEUGES MIT FRÜHER SCHLUPFSTEUERUNG
SYSTEM FOR CONTROLLING A POWER TRAIN OF A MOTOR VEHICLE WITH EARLY SKID CONTROL

(30) Priorité: 24.01.2017 FR 1750547
(43) Date de publication de la demande: 04.12.2019
(73) Titulaire: PSA Automobiles SA, 78300 Poissy (FR)
(72) Inventeur: BOUZIANI, Fethi, 25200 Montbeliard (FR); DUMAINE, Olivier, 68350 Brunstatt (FR)
(86) Numéro de dépôt international: PCT/FR2017/053644
(87) Numéro de publication internationale: WO 2018/138420

(56) Documents cités:
- DE-A1-102006 033 634
- FR-A1- 2 994 897

## Description

L'invention s'inscrit dans le domaine du contrôle du groupe moto-propulseur d'un véhicule automobile. Le groupe moto-propulseur peut comprendre un moteur thermique ou un moteur électrique, et peut éventuellement être un système hybride.

Le groupe moto-propulseur est généralement muni, localement, d'un calculateur dit calculateur moteur, qui reçoit des consignes et effectue des asservissements pour l'exploitation du groupe moto-propulseur à travers un actionneur qui prend différentes formes en fonction de la nature du moteur.

Les véhicules modernes disposent aussi d'un correcteur électronique de trajectoire ou électrostabilisateur programmé, recevant des informations de capteurs liés aux roues, au volant et à la caisse du véhicule.

On connait des systèmes d'anti-patinage inclus dans les correcteurs électroniques de trajectoire qui définissent un couple de traction maximum à appliquer aux roues motrices. Une commande de couple est définie, au niveau du groupe moto-propulseur, à l'aide de cette valeur maximale et des actions du conducteur humain sur les commandes, notamment la pédale d'accélérateur. La motricité du véhicule en phase d'accélération est conservée par suppression du patinage des roues motrices.

Le document FR2994897 décrit une méthode de prise en charge du glissement avec une loi non linéaire dans un électrostabilisateur programmé.

Mais on est en manque de solution qui offre une grande réactivité dans les situations de démarrage ou décollage sur sol glissant avec un moteur à faible inertie, comme les moteurs électriques. Dans ces conditions, le régime du moteur peut dans certaines situations augmenter fortement en un laps de temps qui n'est pas suffisant pour que la fonction d'anti-patinage présente dans le correcteur électronique de trajectoire réagisse pour le réguler. Le signal du correcteur électronique de trajectoire peut ainsi, quand il parvient au groupe moto-propulseur à travers un moyen de communication de type bus de transfert de données, avoir un retard sur le phénomène physique de patinage, et des instabilités peuvent apparaître. Il serait utile d'anticiper le contrôle d'anti-patinage.

Il est souhaité de trouver une solution simple pour remédier à ce problème, sans changer l'architecture des fonctions existantes. En particulier, il est souhaité maintenir dans le correcteur électronique de trajectoire la fonction d'anti-patinage actuelle qui est adaptée pour de nombreuses situations et qui de plus est conjuguée (sans temps de réaction lié à un transfert de données entre deux calculateurs), dans le correcteur électronique, avec le contrôle du couple de freinage hydraulique, pour le contrôle de la stabilité, également fondé sur des informations de capteurs liés aux roues, au volant et à la caisse du véhicule.

Pour résoudre ces problèmes, il est proposé un système de contrôle d'un groupe moto-propulseur de véhicule automobile à conducteur humain avec fonction anti-patinage, le système comprenant un premier module de contrôle configuré pour générer une première consigne de couple moteur pour la motricité et la stabilité du véhicule en réaction à une détection d'un état de patinage d'au moins une roue vis-à-vis du sol, un deuxième module de contrôle pour définir une commande de couple dite coordonnée en limitant, si la première consigne de couple est générée par le premier module de contrôle, une commande de couple définie par le conducteur humain à au plus la première consigne de couple, et un système de transfert de données pour transmettre des consignes du premier module de contrôle à un calculateur du système de contrôle mettant en œuvre le deuxième module de contrôle.

De manière originale, le premier module est de plus configuré pour générer une consigne de limitation de régime de rotation pour le groupe moto-propulseur en fonction d'une vitesse courante du véhicule et le système comprend de plus un troisième module de contrôle mis en œuvre par ledit calculateur et configuré pour générer une consigne avancée de couple pour la propulsion du véhicule fondée sur la commande de couple coordonnée qu'il limite en fonction du régime courant du groupe motopropulseur et de ladite consigne de limitation de régime de rotation.

La réactivité de ce contrôle par limitation du couple par le troisième module est avantageuse, car elle permet de diminuer le patinage avec un moteur à faible inertie, avant même qu'une consigne de diminution du couple basée sur la détection d'un patinage parvienne au calculateur, qui est chargé des asservissements pour l'exploitation du groupe moto-propulseur. Ainsi, le contrôle anti-patinage est anticipé.

Des caractéristiques optionnelles sont les suivantes :
- le premier module de contrôle est configuré pour générer la consigne de limitation de régime de rotation lors du fonctionnement du véhicule, pour que ladite consigne soit disponible pour le troisième module indépendamment de la détection d'un état de patinage d'au moins une roue vis-à-vis du sol ;
- le troisième module de contrôle est configuré pour générer la consigne avancée de couple égale à une valeur de couple de suivi de la consigne de limitation de régime de rotation si le régime courant du moteur dépasse, selon une logique d'activation et de désactivation, la consigne de limitation de régime de rotation et si ladite valeur de couple de suivi n'est pas supérieure à la commande de couple coordonnée ;
- la valeur de couple de suivi est limitée par un seuil pour éviter qu'elle prenne des valeurs trop faibles ;
- le troisième module est configuré pour générer la consigne de couple avancée égale à la commande de couple coordonnée inchangée si le régime courant du moteur ne dépasse pas significativement la consigne de limitation de régime de rotation ou si ladite valeur de couple de suivi est supérieure à la commande de couple coordonnée ;
- la valeur de couple de suivi de la consigne de limitation de régime de rotation est générée à l'aide d'un régulateur proportionnel, intégrateur, dérivateur ;
- le premier module de contrôle est de plus configuré pour générer une consigne de couple de freinage pour la stabilité du véhicule en réaction à une détection d'une dérive d'orientation d'au moins une roue, ladite consigne de couple de freinage étant générer dans un même calculateur que la première consigne de couple moteur.

L'invention porte aussi sur un véhicule automobile comprenant un moteur électrique et un système de contrôle d'un groupe moto-propulseur tel que présenté ci-dessus pour contrôler le moteur électrique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
La figure 1 est un système de contrôle antérieur sur lequel l'invention est fondée.
La figure 2 est un système de contrôle selon l'invention.
La figure 3 est un organigramme d'un module de contrôle incorporé dans le système de la figure 2.
Les figures 4 à 6 sont des représentations de trois logiques du module de la figure 3.

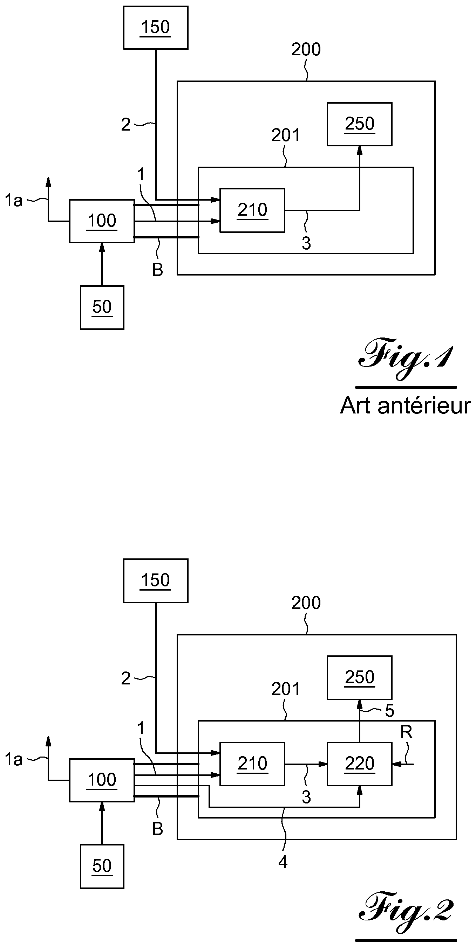

En figure 1, on a représenté un système de contrôle d'un groupe moto-propulseur selon l'art antérieur. Il s'applique à un véhicule automobile à conducteur humain, et est inclus dans celui-ci. Il propose une fonction anti-patinage.

Quand un état de patinage d'une roue motrice (ou plusieurs roues motrices) vis-à-vis du sol est détecté à l'aide de signaux de capteurs 50 (mesurant notamment les vitesses de rotation des roues du véhicule), le correcteur électronique de trajectoire 100, qui constitue un premier module de contrôle du système de contrôle, génère une requête de couple moteur 1 et l'envoie au calculateur moteur 201 du groupe moto-propulseur 200, en réaction à la détection de l'état de patinage. Il l'envoie à travers un bus de communication de données B, qui relie le correcteur électronique de trajectoire 100 au calculateur moteur 201.

La requête, qui constitue une consigne de couple pour la motricité et la stabilité du véhicule, est prise en charge par un module informatique de coordination 210 (qui est aussi un module de contrôle), qui reçoit et prend également en compte la demande d'accélération 2 du conducteur humain, générée par l'appui sur la pédale d'accélérateur 150.

Le module de coordination 210 génère une commande de couple dite coordonnée 3 qui est transmise à l'actionneur 250 du groupe moto-propulseur 200. Quand aucune requête de couple moteur 1 n'est générée par le correcteur électronique de trajectoire 100, le module de coordination définir la commande de couple dite coordonnée 3 comme égale au couple nécessaire pour satisfaire la demande d'accélération 2 du conducteur humain, exprimée par appui sur la pédale d'accélérateur 150.

Quand une requête de couple moteur 1 est générée par le correcteur électronique de trajectoire 100, la commande de couple coordonnée 3 ne dépasse pas la requête de couple moteur 1, et, elle lui est égale si l'action du conducteur humain sur la pédale d'accélérateur est excessive. Il s'agit là ainsi d'un bridage de l'action du conducteur, pour essayer de récupérer de l'adhérence, améliorer la stabilité du véhicule, tout en recherchant également à ne pas réduire inutilement sa motricité.

Par ailleurs, le correcteur électronique de trajectoire 100 génère une consigne de couple de frein 1a pour les freins hydrauliques du véhicule, quand un survirage ou un sous-virage est détecté à l'aide des informations des capteurs 50 pour la stabilité du véhicule sur sa trajectoire.

Le fait qu'un unique calculateur, le correcteur électronique de trajectoire 100, décide de la génération de la consigne de couple de frein 1a et la requête de couple moteur 1 est un avantage en terme de contrôle de la stabilité, les deux fonctions étant gérées sans délai l'une par rapport à l'autre.

Un temps de communication existe par contre entre le correcteur électronique de trajectoire 100 et le calculateur moteur 201, du fait du bus de communication de données B.

En figure 2, on a représenté un mode de réalisation de l'invention, qui constitue une modification du système de la figure 1. Elle est particulièrement mise en œuvre avec un motorisation électrique, qui présente une faible inertie, et pour laquelle il est donc souhaité d'augmenter la réactivité de la fonction anti-patinage au décollage ou démarrage.

Le calculateur moteur 201 comprend un deuxième module informatique, qui est un module de contrôle supplémentaire 220 qui constitue un troisième module de contrôle. Il reçoit la commande de couple coordonnée 3, qui n'est pas transmise directement à l'actionneur 250 comme elle l'était en figure 1.

Le correcteur électronique de trajectoire 100 génère une consigne de limitation de régime de rotation, ici une consigne de régime moteur maximum 4, déterminée à l'aide des vitesses de rotation des roues du véhicule provenant des capteurs 50. Cette consigne de régime moteur maximum 4 définit une valeur de régime de rotation du moteur à ne pas dépasser compte tenu de la vitesse horizontale du véhicule, déterminée sur la base des vitesses de rotation des différentes roues fournies par les capteurs 50, qui permettent de connaître la vitesse horizontale du véhicule, certaines des roues ne patinant pas dans les conditions normales de fonctionnement du véhicule.

La consigne de régime moteur maximum 4 est générée en permanence, et en tout état de cause, indépendamment du fait qu'un état de patinage est identifié ou non.

La consigne de régime moteur maximum 4 est transmise au module de contrôle supplémentaire 220 du calculateur moteur 201, par le bus de transfert de données B.

Le module 220 produit, à l'aide de cette information et de la commande de couple coordonnée 3, une consigne avancée de couple 5 pour les roues motrices et la propulsion du véhicule. Celle-ci est transmise à l'actionneur 250.

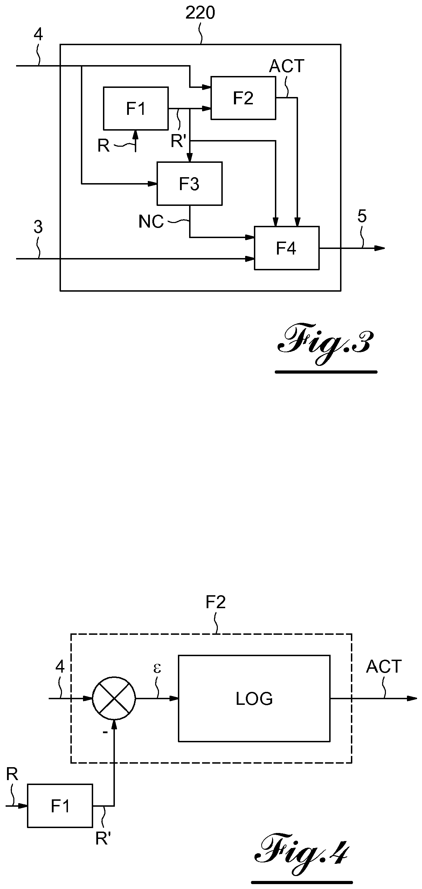

En figure 3, on a représenté le fonctionnement du module de contrôle supplémentaire 220.

Ce module reçoit en entrée la commande de couple coordonnée 3, la consigne de régime moteur maximum 4 et la valeur courante de régime de rotation du moteur R.

Il met en œuvre des fonctions F1 de filtrage du régime du moteur, F2 d'activation et désactivation intégrée, F3 de détermination d'une limite de couple, et F4 de choix de la consigne de couple finale.

La fonction F1 reçoit en entrée est un filtrage rapide de la valeur courante de régime du moteur R. Elle fournit une valeur courante filtrée de régime du moteur R', qui est fournie aux fonctions F2 et F3.

La fonction F2 d'activation et désactivation intégrée reçoit en entrée la consigne de régime moteur 4 et la valeur courante filtrée de régime du moteur R', et met en œuvre, comme représenté en figure 4, une logique d'activation et désactivation LOG avec un seuil. Elle détermine la différence ε entre la consigne 4 et la valeur R', puis envoie un signal d'activation ACT positif si le régime R' dépasse la consigne 1 au-delà d'un seuil de différence. Une fois le signal d'activation ACT passé positif, il est maintenu positif jusqu'à ce que la différence ε entre la consigne 4 et la valeur R' soit négative pendant une durée suffisante, supérieure à un seuil de temps de désactivation. Dans ce cas, le signal d'activation ACT redevient négatif.

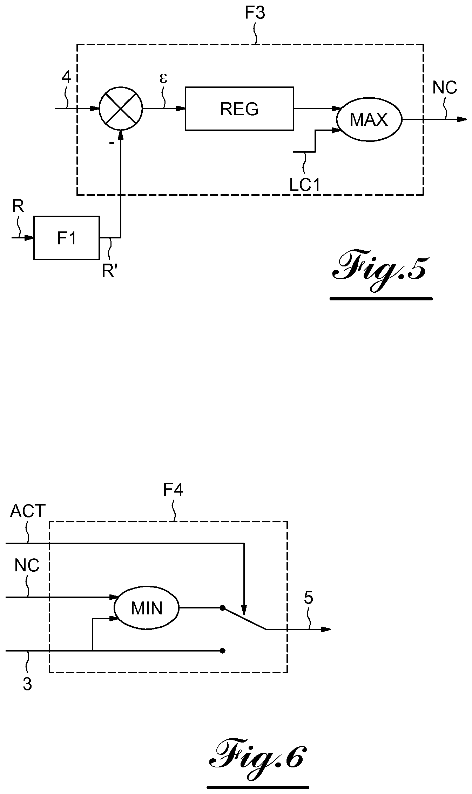

La fonction F3 de détermination d'une limite de couple est présentée en figure 5. Elle reçoit en entrée la valeur courante filtrée de régime du moteur R' et la consigne de régime moteur 4. Elle calcule la différence entre ces deux valeurs, et calcule à l'aide d'un régulateur Proportionnel Intégration Dérivée (PID) REG un couple de suivi correspondant au suivi de la consigne de régime 4 définie par le régulateur linéaire REG. Elle fournit en sortie une valeur de couple NC (nouveau couple), déterminée par le régulateur, ou, si la valeur déterminée par le régulateur devient inférieur à une limite inférieure LC1, égale à cette valeur LC1.

La fonction F4 de choix de la consigne de couple finale est représentée en figure 6. Elle reçoit en entrée la commande de couple coordonnée 3 et le nouveau couple NC, ainsi que le signal d'activation ACT.

Quand le véhicule est actionné en marche avant, le fonctionnement de la fonction F4 est le suivant.

Si le signal d'activation ACT est positif, la fonction F4 choisit la plus faible des deux valeurs parmi la commande de couple coordonnée 3 et le couple de suivi NC, et la produit comme consigne avancée de couple 5. Ainsi le module de contrôle supplémentaire 220 se fonde sur la commande de couple coordonnée 3 et diminue ou limite le couple fourni au roues dans certaines situations à risque de patinage, en fonction du régime courant du moteur R et de la consigne de limitation du régime moteur 4.

Si le signal d'activation ACT est négatif, la fonction F4 choisit la commande de couple coordonnée comme consigne avancée de couple 5.

La fonction F4 peut être commutée (non représenté, pour ne pas compliquer la figure) pour prendre en compte le fait que le conducteur humain a actionné la marche arrière. Cela peut se faire en se basant sur le sens de rotation du moteur (avec des valeurs seuil +V0 et -V0 appliquée à la valeur courante filtrée de régime R'), si l'invention est mise en œuvre avec un moteur électrique (ce pour quoi elle est essentiellement prévue).

Dans ce cas, le même principe est appliqué, mais la plus petite des valeurs de couple en valeur absolue est choisie.

De plus, la fonction F4 peut recevoir une commande externe de désactivation, conçue pour traiter des situations de dysfonctionnement. Dans ce cas, la fonction F4 choisit la commande de couple coordonnée comme consigne avancée de couple 5.

De manière remarquable, le module de contrôle supplémentaire 220 est configuré pour générer une consigne avancée de couple 5 pour la propulsion du véhicule sans prendre en compte directement un état de patinage d'au moins une roue vis-à-vis du sol.

Par contre, le correcteur électronique de trajectoire 100 générant en permanence une limite pour le régime moteur en fonction de la vitesse du véhicule, le module de contrôle supplémentaire 220 est en mesure de réagir très rapidement en limitant le couple moteur appliqué aux roues, sur la base de la valeur de limite reçue du correcteur et de la valeur courante de régime moteur obtenue localement, au sein du groupe moto-propulseur. Le contrôle apporté ainsi est très réactif (anticipé), du fait de l'absence de retard lié à une distance matérielle entre un contrôleur tel le correcteur électronique de trajectoire et le groupe moto-propulseur et les temps de communication des informations dans le bus de communication B.

Cette solution permet de conserver une architecture dans laquelle un correcteur électronique de trajectoire assure la fonction anti-patinage et, dans un même contrôleur, le contrôle du couple de freinage hydraulique.

## Revendications

1. Système de contrôle d'un groupe moto-propulseur de véhicule automobile à conducteur humain avec fonction anti-patinage, le système comprenant un premier module de contrôle (100) configuré pour générer une première consigne de couple moteur (1) pour la motricité et la stabilité du véhicule en réaction à une détection d'un état de patinage d'au moins une roue vis-à-vis du sol, un deuxième module de contrôle (210) pour définir une commande de couple dite coordonnée (3) en limitant, si la première consigne de couple (1) est générée par le premier module de contrôle 100), une commande de couple (2) définie par le conducteur humain à au plus la première consigne de couple (1), et un système de transfert de données (B) pour transmettre des consignes du premier module de contrôle (100) à un calculateur (200) du système de contrôle mettant en œuvre le deuxième module de contrôle (210), **caractérisé en ce que** le premier module (100) est de plus configuré pour générer une consigne de limitation de régime (4) pour le groupe moto-propulseur en fonction d'une vitesse courante du véhicule et le système comprend de plus un troisième module de contrôle (220) mis en œuvre par ledit calculateur (200) et configuré pour générer une consigne avancée de couple (5) pour la propulsion du véhicule fondée sur la commande de couple coordonnée (3) qu'il limite en fonction du régime courant du groupe motopropulseur (R) et de ladite consigne de limitation de régime (4).

2. Système de contrôle selon la revendication 1, **caractérisé en ce que** le premier module de contrôle (100) est configuré pour générer la consigne de limitation de régime (4) lors du fonctionnement du véhicule, pour que ladite consigne soit disponible pour le troisième module (220) indépendamment de la détection d'un état de patinage d'au moins une roue vis-à-vis du sol.

3. Système de contrôle selon l'une des revendications 1 à 2, **caractérisé en ce que** le troisième module de contrôle (220) est configuré pour générer la consigne avancée de couple (5) égale à une valeur de couple de suivi (NC) de la consigne de limitation de régime (4) si le régime courant du moteur (R) dépasse, selon une logique d'activation et de désactivation (LOG), la consigne de limitation de régime (4) et si ladite valeur de couple de suivi (NC) n'est pas supérieure à la commande de couple coordonnée (3).

4. Système de contrôle selon la revendication 3, **caractérisé en ce que** la valeur de couple de suivi (NC) est limitée par un seuil (LC1) pour éviter qu'elle prenne des valeurs trop faibles.

5. Système de contrôle selon la revendication 3 ou la revendication 4, **caractérisé en ce que** le troisième module (220) est configuré pour générer la consigne de couple avancée (5) égale à la commande de couple coordonnée (3) inchangée si le régime courant du moteur (R) ne dépasse pas significativement la consigne de limitation de régime (4) ou si ladite valeur de couple de suivi (NC) est supérieure à la commande de couple coordonnée (3).

6. Système de contrôle selon l'une des revendications 3 à 5, **caractérisé en ce que** la valeur de couple de suivi (NC) de la consigne de limitation de régime (4) est générée à l'aide d'un régulateur proportionnel, intégrateur, dérivateur (REG).

7. Système de contrôle selon l'une des revendications 1 à 6, **caractérisé en ce que** le premier module de contrôle (100) est de plus configuré pour générer une consigne de couple de freinage (1a) pour la stabilité du véhicule en réaction à une détection d'une dérive d'orientation d'au moins une roue, ladite consigne de couple de freinage étant générer dans un même calculateur que la première consigne de couple moteur (1).

8. Véhicule automobile comprenant un moteur électrique et un système de contrôle d'un groupe moto-propulseur selon l'une des revendications 1 à 7 pour contrôler le moteur électrique.

## Patentansprüche

1. Steuersystem eines Kraftfahrzeugantriebsstrangs mit einem menschlichen Fahrer mit Antirutschfunktion, wobei das System ein erstes Steuermodul (100) umfasst, das konfiguriert ist, um einen ersten Motordrehmomentsollwert (1) für Traktion und Geschwindigkeit zu erzeugen . Stabilität des Fahrzeugs als Reaktion auf die Erfassung eines Schlupfzustands von mindestens einem Rad in Bezug auf den Boden , ein zweites Steuermodul (210) zum Definieren eines sogenannten Koordinatenmomentbefehls (3) durch Begrenzen von, Wenn der erste Drehmomentsollwert (1) vom ersten Steuermodul 100) erzeugt wird , ein Drehmomentbefehl(2) durch den menschlichen Fahrer definierte auf höchstens den ersten Drehmomentsollwert (1), und ein Datenübertragungssystem (B) für die Sollwerte von der ersten Steuermodul (100) mit einem Computer (200) der Übertragung des Systems Steuerung, die das zweite Steuermodul (210) implementiert, **gekennzeichnet dadurch, dass** das erste Modul (100) ferner konfiguriert ist, um einen Geschwindigkeitsbegrenzungssollwert (4) für den Antriebsstrang gemäß a zu erzeugen aktuelle Fahrzeuggeschwindigkeit und das System enthält ferner ein drittes Steuermodul (220) implementiert durch den Computer (200) und konfiguriert, um einen erweiterten Drehmomentsollwert (5) für den Antrieb des Fahrzeugs basierend auf dem koordinierten Drehmomentbefehl (3) zu erzeugen, den er als Funktion der aktuellen Geschwindigkeit des Antriebsstrangs (R) begrenzt) und die Geschwindigkeitsbegrenzungsanweisung (4) .

2. Steuersystem nach Anspruch 1, **dadurch gekennzeichnet, dass** das erste Steuermodul (100) konfiguriert ist, um den Geschwindigkeitsbegrenzungssollwert (4) während des Betriebs des Fahrzeugs zu erzeugen, so dass dieser Sollwert für das dritte Modul verfügbar ist (220) unabhängig von der Erfassung eines Schlupfzustands von mindestens einem Rad gegenüber dem Boden.

3. Steuersystem nach einem der Ansprüche 1 bis 2, **gekennzeichnet dadurch, dass** das dritte Steuermodul (220) konfiguriert ist, um den erweiterten Drehmomentsollwert (5) zu erzeugen, der gleich einem Nachdrehmomentwert (NC) des ist Geschwindigkeitsbegrenzungssollwert (4), wenn die aktuelle Motordrehzahl (R) überschreitet, gemäß einer Aktivierungs- und Deaktivierungslogik (LOG), die Geschwindigkeitsgrenze - Sollwert (4) und wenn der Drehmomentwert , Überwachen (NC) ist nicht größer als der koordinierte Drehmomentbefehl (3).

4. Steuersystem nach Anspruch 3, **dadurch gekennzeichnet, dass** der Überwachungsdrehmomentwert (NC) durch einen Schwellenwert (LC1) begrenzt ist, um zu verhindern, dass er zu niedrige Werte annimmt.

5. Steuersystem nach Anspruch 3 oder revendicat Ionen 4, **dadurch gekennzeichnet, daß** das dritte Modul (220) konfiguriert ist, den Drehmomentsollwert zu erzeugen Vorsprung (5) gleich zu dem Steuerkoordinatendrehmoment (3) unverändert, wenn der Plan Der Motorstrom (R) überschreitet den Drehzahlgrenzwertsollwert (4) nicht wesentlich oder wenn der Nachlaufdrehmomentwert (NC) größer als der koordinierte Drehmomentbefehl (3) ist.

6. Steuersystem nach einem der Ansprüche 3 bis 5, **dadurch gekennzeichnet, dass** der Überwachungsdrehmomentwert (NC) des Drehzahlbegrenzungssollwerts (4) unter Verwendung eines proportionalen, integrierenden Reglers erzeugt wird, Umlenker (REG).

7. Steuersystem nach einem der Ansprüche 1 bis 6, **dadurch gekennzeichnet, dass** das erste Steuermodul (100) ferner konfiguriert ist, um einen Bremsmomentsollwert (1a) für die Stabilität des Fahrzeugs als Reaktion auf eine Erfassung zu erzeugen eine Orientierungsdrift von mindestens einem Rad, wobei der Bremsmomentsollwert in demselben Computer wie der erste Motordrehmomentsollwert (1) erzeugt wird.

8. Kraftfahrzeug, umfassend einen Elektromotor und ein Steuersystem für einen Antriebsstrang nach einem der Ansprüche 1 bis 7 zum Steuern des Elektromotors.

## Claims

1. Control system a motor vehicle powertrain with a human driver with anti-skid function, the system comprising a first control module (100) configured to generate a first engine torque setpoint (1) for traction and speed. stability of the vehicle in reaction to a detection of a slip state of at least one wheel with respect to the ground , a second control module (210) for defining a so-called coordinate torque command (3) by limiting, if the first torque setpoint (1) is generated by the first control module 100), a torque command(2) defined by the human driver to at most the first torque setpoint (1), and a data transfer system (B) for transmitting setpoints from the first control module (100) to a computer (200) of the system control implementing the second control module (210), **characterized in that** the first module (100) is further configured to generate a speed limitation setpoint (4) for the powertrain according to a current vehicle speed and the system further includes a third control module (220) implemented by said computer (200) and configured to generate an advanced torque setpoint (5) for propulsion of the vehicle based on the coordinated torque command (3) which it limits as a function of the current speed of the powertrain (R) and said speed limitation instruction (4).

2. Control system according to Claim 1, **characterized in that** the first control module (100) is configured to generate the speed limitation setpoint (4) during operation of the vehicle, so that said setpoint is available for the third module (220) independently of the detection of a slip state of at least one wheel vis-à-vis the ground.

3. Control system according to one of claims 1 to 2, **characterized in that** the third control module (220) is configured to generate the advanced torque setpoint (5) equal to a follow-up torque value (NC) of the speed limit setpoint (4) if the current engine speed (R) exceeds, according to an activation and deactivation logic (LOG), the speed limit setpoint (4) and if said monitoring torque value (NC) is not greater than the coordinated torque command (3).

4. Control system according to Claim 3, **characterized in that** the monitoring torque value (NC) is limited by a threshold (LC1) to prevent it from taking too low values.

5. Control system according claim 3 or revendicat ion 4, **characterized in that** the third module (220) is configured to generate the torque setpoint projection (5) equal to the control torque coordinate (3) unchanged if the plan motor current (R) does not significantly exceed the speed limit setpoint (4) or if said follow-up torque value (NC) is greater than the coordinated torque command (3).

6. Control system according to one of claims 3 to 5, **characterized in that** the monitoring torque value (NC) of the speed limitation setpoint (4) is generated using a proportional, integrating regulator, diverter (REG).

7. Control system according to one of claims 1 to 6, **characterized in that** the first control module (100) is further configured to generate a braking torque setpoint (1a) for the stability of the vehicle in reaction to a detection an orientation drift of at least one wheel, said braking torque setpoint being generated in the same computer as the first engine torque setpoint (1).

8. Motor vehicle comprising an electric motor and a control system for a power train according to one of claims 1 to 7 for controlling the electric motor.
